# DEMANDE DE BREVET EUROPEEN

(11) **EP 1 278 399 A1**
(43) Date de publication de la demande: **22.01.2003**
(21) Numéro de dépôt: 02077764.5
(22) Date de dépôt: 09.07.2002
(51) Int. Cl.: H04S 5/00

(54) **Récepteur, procédé, programme et signal pour adapter le volume sonore d'un signal d'appel**

(30) Priorité: 17.07.2001 FR 0109550
(71) Demandeur: Koninklijke Philips Electronics N.V., 5621 BA Eindhoven (NL)
(72) Inventeur: Lucat, Laurent, Société Civile S.P.I.D., 75008 Paris (FR); Miet, Gilles, Société Civile S.P.I.D., 75008 Paris (FR)
(74) Mandataire: Chaffraix, Jean

(57) **Abrégé**

L'invention concerne un récepteur de communication muni de moyens de spatialisation pour générer, à partir d'un signal d'entrée monophonique, un signal de sortie pseudo stéréophonique. Les moyens de spatialisation comprennent des moyens d'extension de spectre pour générer sur une première voie de sortie un signal de sortie comportant des fréquences de synthèse extrapolées à partir d'une partie de la bande d'origine du signal monophonique d'entrée, tandis que le signal d'entrée est envoyé sur une deuxième voie de sortie.
Application : telephonie mobile de 3^{lème} génération.

## Description

L'invention concerne un émetteur comportant des moyens de spatialisation pour générer, à partir d'un signal d'entrée monophonique, ayant une bande spectrale donnée, dite bande d'origine, un signal de sortie pseudo stéréophonique.

Elle concerne également un récepteur téléphonique pour recevoir un signal, dit signal d'entrée, ayant une bande spectrale donnée, dite bande d'origine, comportant des moyens de spatialisation pour générer, à partir dudit signal d'entrée, un signal de sortie pseudo stéréophonique.

L'invention concerne aussi un procédé de spatialisation audio pour générer, à partir d'un signal d'entrée monophonique ayant une bande spectrale donnée, dite bande d'origine, un signal de sortie pseudo stéréophonique.

Elle concerne enfin un programme d'ordinateur pour mettre en oeuvre ledit procédé et un signal pour transporter ledit programme d'ordinateur.

L'invention a de nombreuses applications notamment dans les appareils téléphoniques radio mobiles.

Il existe de nombreuses méthodes, dites méthodes de spatialisation, pour générer, à partir d'un signal monophonique, un signal pseudo stéréophonique permettant de différencier, dans un appareil d'émission audio, la voie droite de la voie gauche. Ces méthodes peuvent être classées en deux familles principales, avec d'un coté, celles qui réalisent une différentiation spectrale et d'un autre coté, celles qui réalisent une différentiation de phase.

Un objet de l'invention est de fournir des moyens avantageux pour générer un signal pseudo stéréophonique, à partir d'un signal monophonique, selon un principe qui associe une différentiation spectrale et une différentiation de phase.

Pour cela, il est prévu un émetteur et un récepteur du genre mentionnés dans le paragraphe introductif, remarquables en ce que lesdits moyens de spatialisation comprennent des moyens d'extension de spectre pour générer un premier signal de sortie comportant des fréquences de synthèse extrapolées à partir d'une partie de la bande d'origine.

Selon une caractéristique importante de l'invention, les moyens d'extension de spectre comprennent :
- des moyens de filtrage passe-bas (245a) pour sélectionner, dans le signal d'entrée, une bande de fréquences inférieures à une fréquence de coupure,
- des premiers moyens de traitement (245b) pour générer un signal intermédiaire comprenant des fréquences supérieures à la fréquence de coupure, synthétisées à partir des fréquences de la bande sélectionnée et
- des deuxièmes moyens de traitement (245c) pour générer ledit premier signal de sortie, en remplaçant dans le signal d'entrée, au moins une partie des fréquences de la bande d'origine supérieures à la fréquence de coupure, par ledit signal intermédiaire.

Selon une autre caractéristique de l'invention, des moyens de calcul sont prévus pour générer un deuxième signal de sortie, ledit deuxième signal étant une combinaison entre le signal d'entrée et ledit premier signal de sortie selon des pourcentages prédéterminés.

La description suivante, donnée à titre d'exemple non limitatif pour illustrer comment l'invention peut être réalisée, est faite en regard des dessins ci-annexés, parmi lesquels :
- la figure 1 est un schéma bloc fonctionnel pour illustrer un exemple de procédé selon l'invention,
- la figure 2 est un schéma bloc fonctionnel représentant un émetteur / récepteur selon l'invention,
- la figure 3 est un schéma bloc pour illustrer un mode de réalisation d'un récepteur téléphonique selon l'invention.

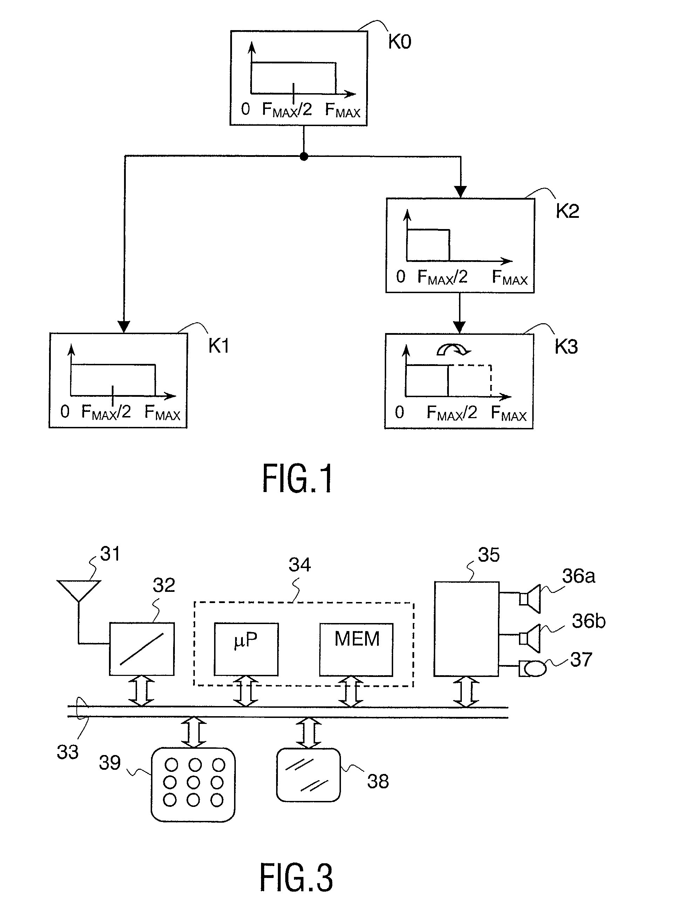

La figure 1 représente un exemple de réalisation d'un procédé selon l'invention pour recevoir un signal d'entrée audio ayant une bande spectrale donnée, dite bande d'origine, comprenant une étape de spatialisation pour générer, à partir du signal d'entrée, un signal de sortie pseudo stéréophonique. Selon l'invention, l'étape de spatialisation comprend une sous-étape de filtrage pour filtrer une partie des fréquences de la bande d'origine et une sous-étape d'extension de spectre pour synthétiser des fréquences de synthèse extrapolées à partir des fréquences restantes de la bande d'origine.

Le procédé est décrit ci-dessous en référence à la figure 1. Il comprend les étapes suivantes :
- une étape de réception K0 pour recevoir un signal d'entrée audio numérique monophonique ayant un spectre de fréquences donné compris entre 0 et F_{MAX}=F_{S}/2, où Fₛ est la fréquence d'échantillonnage du signal,
- une étape de récupération du signal d'entrée K1 pour l'envoyer sur une première voie de sortie, par exemple, sur la voie gauche d'un casque stéréophonique,
- une étape de filtrage K2 pour supprimer une partie des fréquences du spectre d'entrée, par exemple, toutes les fréquences supérieures à la fréquence F_{MAX}/2,
- une étape d'extension de spectre K3 pour synthétiser de nouvelles fréquences extrapolées à partir des fréquences restantes après filtrage, en vue d'obtenir un nouveau signal composite constitué d'une partie du spectre du signal d'entrée auquel on a ajouté une bande de spectre synthétisée.

Le signal d'entrée audio reçu à l'étape de réception K0 est un signal monophonique audio pouvant notamment contenir de la musique codée, par exemple, selon le format numérique MP3. Ce signal peut être préenregistré à partir d'un signal original stéréophonique, dans le but d'économiser de la place en mémoire. Il peut également être un signal original monophonique reçu via un système de télécommunications tel qu'un système de radio téléphonie mobile.

Selon un mode de réalisation préféré de l'invention, l'étape de filtrage K2 effectue un filtrage passe-bas à la fréquence de coupure F_{MAX}/2. Mais ce n'est pas limitatif. Dans ce cas, l'étape d'extension de spectre K3, est prévue pour synthétiser les fréquences comprises entre F_{MAX}/2 et F_{MAX} à partir des fréquences du signal d'entrée comprises entre 0 et F_{MAX}/2.

Plusieurs variantes de réalisation sont envisageables pour obtenir un signal pseudo stéréophonique sur deux voies de sortie audio distinctes. Selon une première variante, un premier signal de sortie correspondant au signal d'entrée obtenu à l'étape K1 est envoyé sur une première voie de sortie d'un casque stéréophonique, par exemple la voie gauche, et un deuxième signal de sortie constitué du signal généré à l'étape K3 est envoyé sur une deuxième voie, par exemple la voie droite. Selon une autre variante, un premier signal de sortie identique au signal d'entrée est envoyé sur l'une des voies de sortie audio et une combinaison linéaire entre le premier signal et le signal généré à l'étape K3 est envoyée sur l'autre voie. A titre d'exemple pratique, une combinaison linéaire constituée de 80% du signal d'entrée et 20% du signal synthétisé à l'étape K3 est envoyé sur la voie droite tandis que le signal d'entrée est envoyé sur la voie gauche.

L'étape d'extension de spectre K3 peut utiliser plusieurs méthodes d'extension connues pour synthétiser de nouvelles fréquences à partir de fréquences initiales disponibles. De nombreuses méthodes d'extension de spectre ont été décrites pour synthétiser, en réception, des fréquences supplémentaires absentes du spectre du signal initial reçu en vue d'améliorer la qualité audio du signal reçu. Ces méthodes trouvent des applications surtout en téléphonie mobile pour obtenir un signal, dit large bande, dans la bande 70Hz-8000Hz à partir d'un signal reçu dans la bande téléphonique traditionnelle, dite bande étroite, comprise entre 300Hz et 3400Hz.

L'invention utilise ces méthodes d'extension de spectre, non pas pour réaliser une extension à posteriori de la bande spectrale du signal reçu mais pour synthétiser un nouveau signal contenant de nouvelles fréquences pour remplacer, dans le signal d'entrée, des fréquences initialement présentes. Ce nouveau signal de synthèse est alors envoyé sur une sortie audio d'un casque stéréo tandis qu'en parallèle, un autre signal, par exemple le signal d'entrée non traité, est envoyé sur l'autre sortie. On a ainsi réalisé un signal pseudo stéréophonique à partir d'un signal monophonique. Une méthode telle que celle décrite dans la demande de brevet internationale publiée sous le numéro WO 01/35395 pourra être utilisée dans l'étape K3 pour synthétiser les fréquences aigus supérieures à F_{MAX}/2 à partir de la bande 0 - F_{MAX}/2. D'autres méthodes peuvent également être utilisées, telles que celles décrites :
- dans le brevet américain publié sous le numéro US 5 581 652,
- dans la demande de brevet européen publiée sous le numéro EP 0 911 807,
- dans la revue " IEEE workshop on speech coding. Model, coders and error criteria, Porvoo, Finland, du 20 au 23 juin 1999", pages 174-176, référence XP002159073, par J. Epps et al. "a new technique for wideband enhancement of coded narrowband speech", etc.

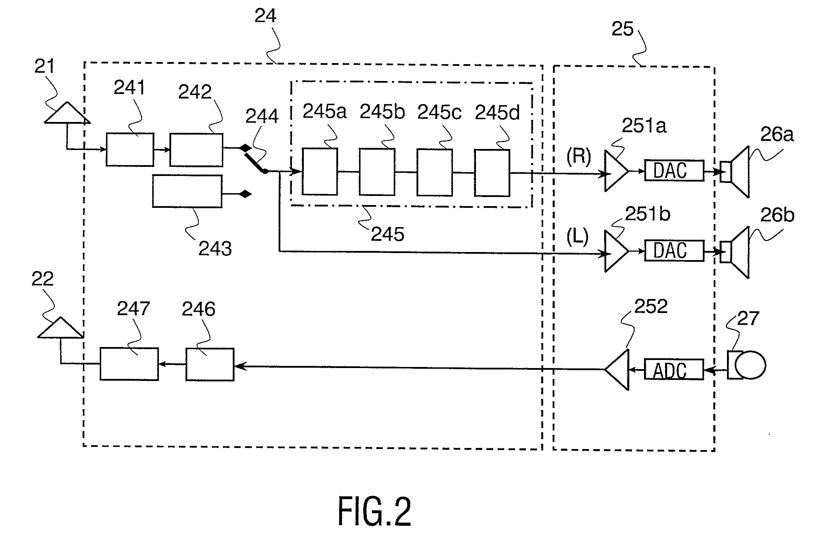

La figure 2 est un schéma bloc fonctionnel pour illustrer le fonctionnement d'un récepteur téléphonique selon l'invention. Il comprend une antenne de réception 21, une antenne d'émission 22, un bloc de traitement numérique du signal 24, par exemple implémenté à l'aide d'un processeur de type DSP (de l'anglais Digital Signal Processor), un bloc de codage / décodage audio 25, une paire d'écouteurs stéréo 26a et 26b et un microphone 27. Le bloc de codage / décodage audio 25 effectue les conversions analogique / numérique ADC et numérique / analogique DAC ainsi que la quantification du signal ainsi numérisé. Le bloc de traitement numérique du signal 24 comprend, en réception : un bloc de décodage de canal 241, un bloc de décodage de source 242, un bloc de génération de musique monophonique préenregistrée 243, par exemple codée selon le standard MP3, un interrupteur 244, un bloc de post-traitement 245 et en émission : un bloc de codage de source 246 et un bloc de codage de canal 247.

Selon un mode de réalisation préféré de l'invention illustré à la figure 2, le récepteur peut fonctionner selon deux modes distincts au choix de l'utilisateur. Selon le premier mode, dit mode streaming, un signal pseudo stéréophonique est généré à partir d'un signal monophonique transmis, par exemple, via un système de télécommunications mobiles de troisième génération et reçu via l'antenne de réception 21 avant d'être décodé par les blocs de décodage de canal 241 et de décodage de source 242. Selon le deuxième mode, dit mode download, un signal pseudo stéréophonique est généré à partir d'un signal monophonique préenregistré, ayant été préalablement téléchargé, par exemple depuis un site Internet puis stocké sous forme monophonique pour optimiser la place mémoire, en vue d'être restitué par le bloc de génération MP3 243. L'interrupteur 244 est prévu pour connecter l'entrée du bloc de post-traitement 245 à la sortie du bloc de décodage de source 242 ou de génération de musique MP3 243, selon le mode choisi. Le signal monophonique, dit signal d'entrée, est ensuite traité par le bloc de post-traitement 245 selon le procédé décrit en référence à la figure 1, pour générer deux signaux stéréo distincts sur la voie gauche (L) et sur la voie droite (R), respectivement. Pour cela, le bloc de post-traitement 245 comprend :
- un filtre passe-bas 245a pour sélectionner une partie de la bande d'origine contenant les fréquences inférieures à la fréquence de coupure F_{MAX}/2,
- un premier bloc de traitement 245b pour générer un signal intermédiaire comprenant des fréquences supérieures à la fréquence de coupure, synthétisées à partir des fréquences de la bande sélectionnée selon une méthode d'extension de spectre adéquate et
- un deuxième bloc de traitement 245c pour générer un premier signal de sortie, en remplaçant dans le signal d'entrée, au moins une partie des fréquences de la bande d'origine supérieures à la fréquence de coupure, par le signal intermédiaire,
- un bloc de calcul 245d pour effectuer une combinaison linéaire entre le signal d'entrée et le premier signal de sortie selon des pourcentages prédéterminés, par exemple 80% et 20% respectivement, pour obtenir un deuxième signal de sortie destiné à être envoyé sur l'une des voies de sortie, par exemple la voie de gauche (L).

Selon le mode de réalisation décrit à la figure 2, la voie de gauche (L) reçoit le signal d'entrée qui n'a pas été traité par le bloc de traitement. Selon des variantes de réalisation, le signal de sortie émis sur la voie de gauche peut également subir un traitement par le bloc de traitement 245. Ce traitement devra alors être différent du traitement effectué sur la voie droite de sorte que les signaux envoyés sur les deux voies soient différents pour obtenir l'effet pseudo stéréo désiré. Le bloc de calcul 245d est facultatif.

La figure 3 est un schéma représentant sous forme de blocs les principaux composants du récepteur décrit à la figure 2. Il comprend :
- une antenne d'émission / réception 31,
- un bloc d'émission / réception 32,
- un bus de transport 33 pour transporter des adresses et des données entre les différents composants,
- un bloc de traitement numérique du signal 34 comportant notamment un microprocesseur µP et de la mémoire MEM,
- une interface audio 35 pour relier les circuits du téléphone avec les haut-parleurs de chaque voie 36a et 36b ainsi que le microphone 37,
- un écran 38 et un clavier 39.

Le bloc de traitement numérique du signal correspond au bloc 24 dans la figure 2, il peut être implémenté à l'aide d'un DSP. La mémoire MEM comprend de la mémoire vive pour stocker des données provisoires et de la mémoire morte pour stocker des données permanentes telles que des instructions de code de programme destinées à mettre en oeuvre le procédé décrit à la figure 1. L'interface 35 correspond au bloc de codage décodage audio 25 de la figure 2.

Le signal audio monophonique est soit reçu par l'antenne 31 puis converti par les circuits de réception 32 avant d'être traité dans le bloc de traitement numérique 34, soit directement fourni par le bloc de traitement numérique 34, dans lequel il était stocké en mémoire. Après séparation en deux signaux distincts et traitement spécifique de chacun des signaux, chaque signal est converti en un signal analogique par le bloc d'interface 35 pour être envoyé sur une voie de sortie distincte d'un casque stéréo représenté sur la figure 3 par les haut-parleurs 36a et 36b.

On a ainsi décrit et illustré à l'aide d'exemples un émetteur, un récepteur, un procédé, un programme d'ordinateur et un signal pour générer un signal pseudo stéréo à partir d'un signal mono. D'autres exemples de réalisation peuvent aisément être dérivés des exemples décrits sans sortir du cadre de l'invention. En particulier, l'invention n'est pas limitée aux méthodes d'extension de spectre citées.

## Revendications

1. Emetteur comportant des moyens de spatialisation pour générer, à partir d'un signal monophonique, dit signal d'entrée, ayant une bande spectrale donnée, dite bande d'origine, un signal de sortie pseudo stéréophonique, **caractérisé en ce que** lesdits moyens de spatialisation comprennent des moyens d'extension de spectre (245) pour générer un premier signal de sortie comportant des fréquences de synthèse extrapolées à partir d'une partie de la bande d'origine.

2. Emetteur selon la revendication 1, dans lequel lesdits moyens d'extension de spectre comprennent :
- des moyens de filtrage passe-bas (245a) pour sélectionner, dans le signal d'entrée, une bande de fréquences inférieures à une fréquence de coupure,
- des premiers moyens de traitement (245b) pour générer un signal intermédiaire comprenant des fréquences supérieures à la fréquence de coupure, synthétisées à partir des fréquences de la bande sélectionnée et
- des deuxièmes moyens de traitement (245c) pour générer ledit premier signal de sortie, en remplaçant dans le signal d'entrée, au moins une partie des fréquences de la bande d'origine supérieures à la fréquence de coupure, par ledit signal intermédiaire.

3. Emetteur selon la revendications 2, comprenant des moyens de calcul (245d) pour générer un deuxième signal de sortie, ledit deuxième signal étant une combinaison linéaire entre le signal d'entrée et ledit premier signal de sortie selon des pourcentages prédéterminés.

4. Récepteur téléphonique pour recevoir un signal, dit signal d'entrée, ayant une bande spectrale donnée, dite bande d'origine, et des moyens de spatialisation pour générer, à partir dudit signal d'entrée, un signal de sortie pseudo stéréophonique, **caractérisé en ce que** lesdits moyens de spatialisation comprennent des moyens d'extension de spectre (245) pour générer un premier signal de sortie comportant des fréquences de synthèse extrapolées à partir d'une partie de la bande d'origine.

5. Récepteur selon la revendication 4, dans lequel lesdits moyens d'extension de spectre comprennent :
- des moyens de filtrage passe-bas (245a) pour sélectionner, dans le signal d'entrée, une bande de fréquences inférieures à une fréquence de coupure,
- des premiers moyens de traitement (245b) pour générer un signal intermédiaire comprenant des fréquences supérieures à la fréquence de coupure, synthétisées à partir des fréquences de la bande sélectionnée et
- des deuxièmes moyens de traitement (245c) pour générer ledit premier signal de sortie, en remplaçant dans le signal d'entrée, au moins une partie des fréquences de la bande d'origine supérieures à la fréquence de coupure, par ledit signal intermédiaire.

6. Récepteur selon la revendication 5, comprenant des moyens de calcul (245d) pour générer un deuxième signal de sortie, ledit deuxième signal étant une combinaison linéaire entre le signal d'entrée et ledit premier signal de sortie selon des pourcentages prédéterminés.

7. Procédé de spatialisation audio pour générer, à partir d'un signal d'entrée monophonique ayant une bande spectrale donnée, dite bande d'origine, un signal de sortie pseudo stéréophonique, **caractérisé en ce qu'**il comprend une étape de filtrage (K2) pour sélectionner une partie des fréquences de la bande d'origine et une étape d'extension de spectre (K3) pour synthétiser des fréquences extrapolées à partir des fréquences sélectionnées.

8. Programme d'ordinateur comportant des instructions de code de programme pour mettre en oeuvre le procédé selon la revendication 7.

9. Signal pour transporter un programme d'ordinateur selon la revendication 8.
